# EUROPEAN PATENT APPLICATION

(11) **EP 3 511 187 A1**
(43) Date of publication of application: **17.07.2019**
(21) Application number: 18205773.7
(22) Date of filing: 24.12.2010
(51) Int. Cl.: B60K 7/00, B60K 6/52, B60K 6/442, B60K 17/04, B60K 6/448

(54) **INDIVIDUAL-POWERED DUAL CVT DIFFERENTIAL SYSTEM WITH STABILIZING DEVICE**

(30) Priority: 28.12.2009 US 65464309; 25.03.2010 US 65992010
(62) Divisional of application: 10197012.7
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

The present invention relates to a multi-motor driving common load, such as two or more motors, in which CVT is installed between the individual motor and the wheel group at individual load, when the multi-motor, such as two or more motors, installed at the common load structure individually drives the individual load through the arranged CVT to get rotational speed difference, and to make differential speed drive operation through the speed ratio variation by the CVT, and the stabilizing device constituted by torque limited coupling device with sliding damping during sliding is installed between the loads individually driven by the two CVTs.

## Description

### BACKGROUND OF THE INVENTION

### (a) Field of the invention

The present invention relates to two or more than two independent motors installed at the common load, through speed ratio variation made by the CVT individually installed between the individual motor and the individual driven load, to match the differential speed operation drive between the loads driven by individual motor, in which the stabilizing device constituted by the torque limited coupling device with sliding damping during sliding is installed between the loads individually driven by the two CVTs, the stabilizing device synchronously operates when the torque transmitted between the two loads operates within the limited torque range, and the stabilizing device differentially operates to produce sliding damping to stabilize the operation of the drive system when the torque transmitted between the two loads exceeds the limited torque range.

### (b) Description of the Prior Art

Traditionally, when two or more loads installed at the common load are driven through differential speed regulation by a single motor, the differential speed function is often achieved by differential wheel group, which has shortcomings including transmission efficiency loss, space used, and weight; if a vehicle is driven by dual motors, two independent drive circuits are often installed, and the central control unit refers to the following parameters, such as vehicle speed, output rotational speed detection device, steeling wheel shift values, as well as the road gradient, the center of gravity in the vehicle after load, and processes for controlling the two independent drive circuits, and then the two independent drive circuits respectively drive the two motors to make close loop or semi-close loop rotational speed control between the two motors for achieving differential speed function, but it has shortcomings including high cost and complex system operation.

### SUMMARY OF THE INVENTION

The present invention relates to a multi-motor hybrid power driving system for driving a common load body comprising: a first motor arranged to drive a first wheel; a first continuously variable transmission disposed between the first motor and the first wheel; a second motor arranged to drive a second wheel; a second continuously variable transmission disposed between the second motor and the second wheel; a torque limited coupling device disposed between the first and second wheels; an engine arranged to drive a third wheel and a fourth wheel; and a transmission disposed between the engine and each of the third wheel and the fourth wheel, wherein the transmission is arranged to transfer power output from the engine to each of the third wheel and the fourth wheel simultaneously.

### BRIEF DESCRIPTION OF THE DRAWINGS

Fig. 1 is a schematic view showing an example of an individual-powered dual CVT differential system with stabilizing device;
Fig. 2 is a schematic view showing an embodiment that the multi-motor drive system with speed differential regulated by the continuous variable transmission and the engine power drive unit are simultaneously installed at a common load body L300 to form a hybrid power system;
Fig. 3 is a schematic view showing an embodiment of the system in Fig. 2 to be additionally installed with a clutch unit;
Fig. 4 is a schematic view showing an embodiment that the multi-motor drive systems with speed differential regulated by continuous variable transmission, the engine power drive unit, and the electric storage-discharge unit ESD100 are simultaneously installed at a common load body L400 to form a hybrid power system; and
Fig. 5 is a schematic view showing an embodiment of the system in Fig. 3 to be additionally installed with clutch units.

### DESCRIPTION OF MAIN COMPONENT SYMBOLS

CCU100, CCU200, CCU300, CCU400: Central control unit
CL100, CL200, CL300, CL400: Clutch unit
CVT100, CVT200, CVT300, CVT400: Continuous variable transmission
ECU100, ECU200, ECU300, ECU400: Electric control unit
EMU100: Electric energy management unit
ESD100: Electric storage-discharge unit
FC100: Fuel control unit
G100: Generator
ICE100: Engine
L100, L200, L300, L400: Common load body
M100, M200, M300, M400: Motor
MI100, MI200, MI300, MI400: User interface
SD100: Engine speed detecting device
SDT100, SDT200: Stabilizing device
T100, T200, T300, T301, T400: Transmission
TANK100: Tank
W100, W200, W300, W301, W400, W401: Wheel group

### DETAILED DESCRIPTION OF THE PREFERRED EMBODIMENTS

The present invention relates to a multi-motor driving common load, such as two or more motors, in which the CVT is installed between individual motor and a wheel group at individual load, when the multi-motor with two or more than two motors installed at the common load structure individually drives the individual load through the arranged CVT to get rotational speed difference, and to make differential speed drive operation through the speed ratio variation by the CVT, and the stabilizing device constituted by the torque limited coupling device with sliding damping during sliding is installed between the loads individually driven by the two CVTs, during driving operation, if the loads individually driven by the two CVTs vary, or if the response time of the clutch unit at the loads individually driven by the two CVTs is slower, or if the two clutch units operate unstably because of the synchronous response time difference thereof, the stabilizing device installed between the loads operates to stabilize the system.

The CVT in the present invention is a continuous variable transmission, which can automatically change the speed ratio with the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission.

The common load in the present invention refers to the wheel-type vehicle, tracked vehicle, rail vehicle, or ship driven by at least two independent motors installed, or conveyor for stream of people or logistics, or industrial equipment driven by at least two motors; the common load may be further equipped with the engine power system, free wheel, and related operational interface unit.

The various embodiments of the present invention are described as following.

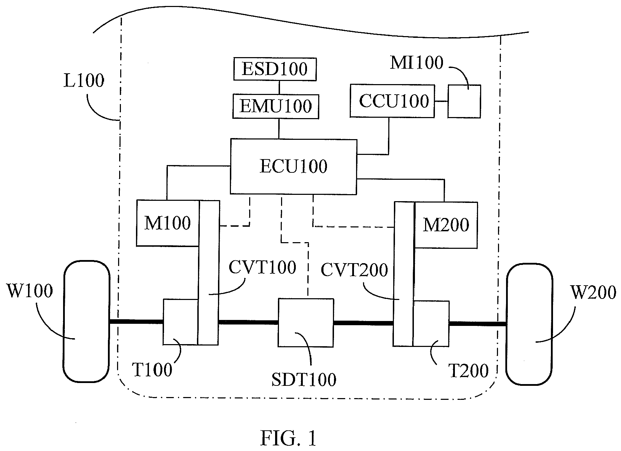

Fig. 1 is a schematic view showing an example of the individual-powered dual CVT differential system with stabilizing device.

As shown in Fig. 1, the structure is as following, in which, for the common load body L100, the motor M100 is installed to drive the wheel group W100 placed at the load through the continuous variable transmission CVT100 and the transmission T100, and the motor M200 is installed to drive the wheel group W200 placed at the load through the continuous variable transmission CVT200 and the transmission T200, and the stabilizing device constituted by the torque limited coupling device with sliding damping during sliding is installed between the loads individually driven by the two CVTs of the motors, if the wheel group W100 and the wheel group W200 placed at the load are driven with speed differential, the continuous variable transmission CVT100 and the continuous variable transmission CVT200 automatically regulate the speed ratio with the load variation to coordinate with rotation differential between the wheel group W100 and the wheel group W200 at the load, and the stabilizing device stabilizes the operation between the loads individually driven by the two CVTs, in which:
-- motors M100, M200: constituted by rotary motors, which are AC or DC, brushless or brush, synchronous or non-synchronous, internal or external rotation type;
-- continuous variable transmissions CVT100, CVT200: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission;
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT100 and CVT200, if unstable operation is caused by the varied load at individual load side during driving operation, the stabilizing device SDT100 installed between the loads operates to stabilize the system;
-- transmission T100: related to fixed speed ratio, variable speed ratio, or stepless speed variable transmission, which is constituted by mechanical gear unit, sprocket unit, pulley unit, or linkage group; and the transmission is selectable as needed;
-- electric control unit ECU100: constituted by the electric machine and/or the solid state power element, and/or the electronic element, and/or the microprocessor, and/or related software, for receiving the control of the user interface MI100 and/or the central control unit CCU100, wherein a motor drive control circuit is installed within the electric control unit ECU100 for manipulating rotational speed, torque, rotary direction, and current of the parallel connected motors M100 and M200; or motor drive control circuits individually equipped to the motors M100 and M200 are individually installed within the electric control unit ECU100 for individually manipulating rotational speed, torque, rotary direction, and current of the motors M100 and M200, which do not involve the close loop or semi- close loop rotational speed control between the two motors to achieve the speed differential function; the speed differential operation between the loads is through the continuous variable transmission installed between the individual motor and the load to perform speed difference regulation;
   if the continuous variable transmission which changes the speed ratio by receiving external manipulation is adopted by the system, the electric control unit ECU100 includes the drive control circuit of the continuous variable transmission with the user interface MI100 for accepting manual manipulation and/or controlled by the central control unit CCU100;
-- electric energy management unit EMU100: constituted by the electric machine, and/or solid state power element, and/or electronic element, and/or microprocessor, and/or related software, for controlling the output voltage, the current and the charging voltage and current of the electric storage-discharge unit ESD100, to start and stop the timing of charging;
-- central control unit CCU100: related to analog or digital, or both mixed control device, constituted by the electric machine and/or solid state power element, and/or including microprocessor, and/or control software, and/or related circuit element, for following the command of the user interface MI100, and/or for setting control mode to further control the operation of the system;
-- user interface MI100: related to linear analog or digital, or both mixed control device, constituted by the operating mechanism, and/or the electric machine, and/or the solid state circuit, for linking with the central control unit CCU100 to control the operation of the system;
-- electric storage-discharge unit ESD100: constituted by various rechargeable secondary battery, or capacitor, or super capacitor.

Through the operation of the above device, if the common load body L100 is driven for operation, and the wheel group W100 and the wheel group W200 at the loads operate at differential speed, , the speed ratio is individually regulated with the load variation of the wheel group W100 and the wheel group W200 installed at the load, to facilitate the speed differential operation drive between the wheel group W100 and the second wheel group W200 installed at the load, and the stabilizing device SDT100 stabilizes the operation between the loads individually driven by the continuous variable transmission CVT100 and the continuous variable transmission CVT200.

The individual-powered dual CVT differential system with stabilizing device is further applied to the hybrid power drive system.

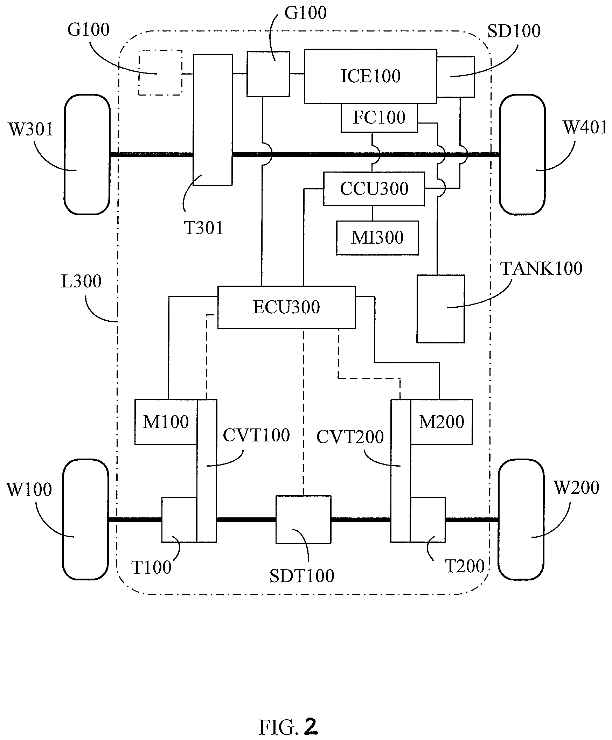

Fig. 2 is a schematic view showing an embodiment that the multi-motor drive system with speed differential regulated by the continuous variable transmission and the engine power drive unit are simultaneously installed at a common load body L300 to form a hybrid power system.

As shown in Fig. 2, the main components include:
-- common load body L300: one end of the common load is installed with the multi-motor drive system with speed differential regulated by the continuous variable transmission CVT100 and the continuous variable transmission CVT200;
   the other end of the common load body L300 is installed with an engine power system constituted by an engine ICE100 and a transmission T301 with the functions of clutch, speed variable, and speed difference, for the wheel group W301 and the wheel group W401 driving the load through the transmission T301;
-- motors M100, M200: constituted by rotary motors, which are AC or DC, brushless or brush, synchronous or non-synchronous, internal or external rotation type;
-- generator G100: constituted by the rotary generator, which are AC or DC, brushless or brush, synchronous or non-synchronous, internal or external rotation type; in which the generator G100 is installed between the engine ICE100 and the transmission T301, or at the engine ICE100 non-coupling side of the transmission T301, or at the output side of the transmission T301 coupled and driven by the engine ICE100;
-- continuous variable transmissions CVT100, CVT200: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT100 and CVT200, if unstable operation is caused by the varied load at individual load side during driving operation, the stabilizing device SDT100 installed between the loads operates to stabilize the system;
-- electric control unit ECU300: constituted by the electric machine and/or the solid state power element, and/or the electronic element, and/or the microprocessor, and/or related software, for receiving the control of the user interface MI300 and/or the central control unit CCU300, to control the power generation operation timing of the generator G100 and the voltage and current of the generating power, in which one motor drive control circuit is installed within the electric control unit ECU300 to control the rotational speed, torque, rotary direction, and current of the parallel connected motors M100 and M200; or motor drive control circuits individually equipped to the motors M100 and M200 are individually installed within the electric control unit ECU300 to individually control the rotational speed, torque, rotary direction, and current of the motors M100 and M200, which do not involve the close loop or semi- close loop rotational speed control between the two motors to achieve the speed differential function; the speed differential operation between the loads is through the continuous variable transmission installed between the individual motor and the load to perform speed difference regulation.

If the continuous variable transmission which changes the speed ratio by receiving external manipulation is adopted by the system, the electric control unit ECU300 includes the drive control circuit of the continuous variable transmission with the user interface MI300 for accepting manual manipulation and/or controlled by the central control unit CCU300;
-- central control unit CCU300: related to analog or digital, or both mixed control device, constituted by the electric machine and/or the solid state power element, and/or the microprocessor including control software, and/or related circuit element, for following the command of the user interface MI300, or for setting control mode, and/or the feedback signal of the engine speed detecting device SD100 to further control the operation of the system;
-- user interface MI300: related to linear analog or digital, or both mixed control device, constituted by the operating mechanism, and/or the electric machine, and/or the solid state circuit, for linking with the central control unit CCU300 to control the operation of the multi-motor drive system with speed differential regulated by the continuous variable transmission CVT100 and the continuous variable transmission CVT200, and the operation of the engine power system;
-- transmissions T100, T200: related to fixed speed ratio, variable speed ratio, or stepless speed variable transmissions, which are constituted by mechanical gear units, sprocket units, pulley units, or linkage groups; and the transmissions are selectable as needed; and
-- transmission T301: constituted by the transmission component with the functions of clutch, and/or speed variable, and/or speed difference .

By way of the operations of the above units, if the common load body L300 is driven for operation, and the wheel groups W100 and W200 installed at the load perform speed differential operation, the continuous variable transmission CVT100 and the continuous variable transmission CVT200 individually perform speed ratio regulation according to the load variation of the wheel group W100 and the wheel group W200 installed at the load, to facilitate the speed differential operation drive between the wheel group W100 and the second wheel group W200 installed at the load.

The system is also installed with the required fuel control unit FC100, the tank TANK100, and/or the engine speed detecting device SD100 for the control of the engine drive operation, including:
-- fuel control unit FC100: related to the power-driven servo unit and/or the mechanical and/or the current force- type drive unit for receiving the direct control from the central control unit CCU300 and/or the engine speed detecting device SD100 to control the fuel supply status of the engine ICE100, and to further control the rotational speed and the torque force of the engine ICE100;
-- tank TANK100: used for engine fuel storage, through the fuel pipeline and the fuel control unit FC100 between the tank TANK100 and the engine ICE100, for controlling the fuel to the engine ICE100; and
-- engine speed detecting device SD100: related to analog or digital rotational speed detecting device, which transfers the amount of angular displacement to the corresponding physical signal, and/or substituted by analog voltage value or frequency value of the generator G100, for transmitting the engine rotational speed signal to the central control unit CCU300, and/or directly controlling the fuel to the engine from the fuel control unit FC100, and/or the engine speed detecting device SD100 constituted by mechanical detecting structure, such as centrifugal type, mechanically interacting with the fuel control unit FC100 to control the operation of the engine ICE100; the above two types is selected according to the system features.

The hybrid power system constituted by the individual-powered dual CVT differential system with stabilizing device, as shown in Fig. 2, includes one or more of the following operational functions, including:
-- the power system, driven by the engine ICE100, drives the wheel group W301 and the wheel group W401to drive the common load body L300; and/or
-- the engine ICE100 operates within the fuel efficient operation range with lower fuel consumption and higher output power to achieve the best break specific fuel consumption, so as to drive the generator G100, and the generating power directly, or through the motor drive control circuit installed within the electric control unit ECU300, controls the driving operation of the motor M100 and the motor M200 to drive the common load body L300.

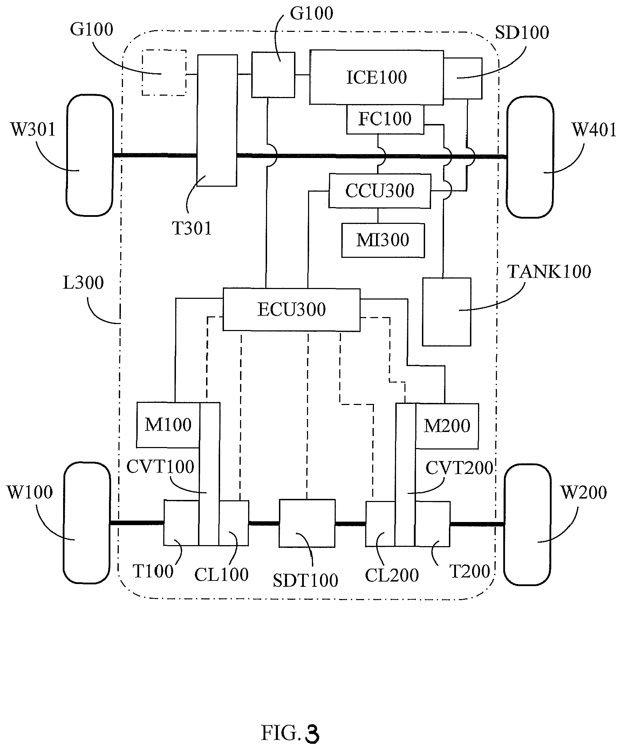

As shown in Fig. 2, the multi-motor drive system with speed differential regulated by the continuous variable transmission and the engine power drive unit are simultaneously installed at the common load body L300 to constitute the hybrid power system, in which, for the multi-motor drive system with speed differential regulated by the continuous variable transmission installed at the common load body L300, the load is directly driven by the continuous variable transmission, or driven by the continuous variable transmission and the transmission, furthermore, the clutch unit CL100 is additionally installed between the continuous variable transmission CVT100 and the transmission T100, and the clutch unit CL200 is additionally installed between the continuous variable transmission CVT200 and the transmission T200, to individually control the linking transmission or cutting separation between the continuous variable transmission CVT100 and the transmission T100, and between the continuous variable transmission CVT200 and the transmission T200. Fig. 3 is a schematic view showing an embodiment of the system in Fig. 2 to be additionally installed with clutch units;

As shown in Fig. 3, in which:
-- clutch units CL100, CL200: related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side.
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units CL100 and CL200 individually driven by the continuous variable transmissions CVT100 and CVT200, during driving operation, if the load at individual load side varies, or if the response time of the clutch units CL100 and CL200 at the loads individually driven by the continuous variable transmissions CVT100 and CVT200 is slower, or if the clutch units CL100 and CL200 operate unstably because of the synchronous response time difference thereof, the stabilizing device SDT100 installed between the loads of the clutch units CL100 and CL200 operates to stabilize the system.

The hybrid power system constituted by the individual-powered dual CVT differential system with stabilizing device and the engine power system is further additionally installed with an electric storage-discharge unit ESD100 to improve the function.

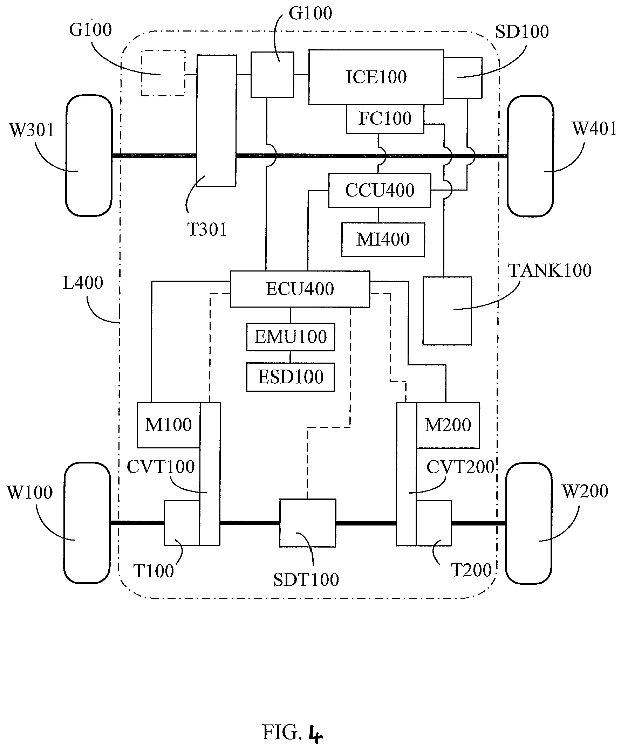

Fig. 4 is a schematic view showing an embodiment that the multi-motor drive systems with speed differential regulated by continuous variable transmission, the engine power drive unit, and the electric storage-discharge unit ESD100 are simultaneously installed at a common load body L400 to form a hybrid power system.

As shown in Fig. 4, the electric storage-discharge unit ESD100 is used to receive the generating power of the generator G100 driven by the engine ICE100 for charging, and/or to receive the power of the regenerated electricity from kinetic energy reclaimed by the motor M100 and/or the motor M200 for charging, and/or to receive the external power supply for charging, by way of the power provided by the electric storage-discharge unit ESD100 and/or the power generated by the generator G100, through the motor drive control circuit in the electric control unit ECU400, to control the driving operations of the motor M100 and the motor M200, the components including:
-- common load body L400: one end of the common load is installed with the multi-motor drive system with speed differential regulated by the continuous variable transmission CVT100 and the continuous variable transmission CVT200;
-- the other end of the common load body L400 is installed with an engine power system constituted by an engine ICE100 and a transmission T301 with the functions of clutch, speed variable, and speed difference, for the wheel group W301 and the wheel group W401 driving the load through the transmission T301;
-- motors M100, M200: constituted by rotary motors, which are AC or DC, brushless or brush, synchronous or non-synchronous, internal or external rotation type;
-- generator G100: constituted by the rotary generator, which are AC or DC, brushless or brush, synchronous or non-synchronous, internal or external rotation type; in which the generator G100 is installed between the engine ICE100 and the transmission T301, or at the engine ICE100 non-coupling side of the transmission T301, or at the output side of the transmission T301 coupled and driven by the engine ICE100;
-- continuous variable transmissions CVT100, CVT200: related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions CVT100 and CVT200, if unstable operation is caused by the varied load at individual load side during driving operation, the stabilizing device SDT100 installed between the loads operates to stabilize the system;
-- electric control unit ECU400: constituted by the electric machine and/or the solid state power element, and/or the electronic element, and/or the microprocessor, and/or related software, for receiving the control of the user interface MI400 and/or the central control unit CCU400, to control the power generation operation timing of the generator G100 and the voltage and current of the generating power, in which one motor drive control circuit is installed within the electric control unit ECU400 to control the rotational speed, torque, rotary direction, and current of the parallel connected motors M100 and M200; or motor drive control circuits individually equipped to the motors M100 and M200 are individually installed within the electric control unit ECU400 to individually control the rotational speed, torque, rotary direction, and current of the motors M100 and M200, which do not involve the close loop or semi- close loop speed rotational control between the two motors to achieve the speed differential function; the speed differential operation between the loads is through the continuous variable transmission installed between the individual motor and the load to perform speed difference regulation;
   if the continuous variable transmission which changes the speed ratio by receiving external manipulation is adopted by the system, the electric control unit ECU400 includes the drive control circuit of the continuous variable transmission with the user interface MI400 for accepting manual manipulation and/or controlled by the central control unit CCU400;
-- electric energy management unit EMU100: constituted by the electric machine and/or the solid state power element, and/or the electronic element, and/or the microprocessor, and/or related software, for controlling the output voltage, the current and the charging voltage and current of the electric storage-discharge unit ESD100, to start and stop the timing of charging;
-- electric storage-discharge unit ESD100: constituted by various rechargeable secondary battery, or capacitor, or super capacitor;
-- central control unit CCU400: related to analog or digital, or both mixed control device, constituted by the electric machine and/or the solid state power element, and/or the microprocessor including control software, and/or related circuit element, for following the command of the user interface MI400, or for setting control mode, and/or the feedback signal of the engine speed detecting device SD100 to further control the operation of the system;
-- user interface MI400: related to linear analog or digital, or both mixed control device, constituted by the operating mechanism, and/or the electric machine, and/or the solid state circuit, for linking with the central control unit CCU400 to control the operation of the multi-motor drive system with speed differential regulated by the continuous variable transmission CVT100 and the continuous variable transmission CVT200, and the operation of the engine power system, so as to drive the common load body L400;
-- transmissions T100, T200: related to fixed speed ratio, variable speed ratio, or stepless speed variable transmissions, which are constituted by mechanical gear units, sprocket units, pulley units, or linkage groups; and the transmissions are selectable as needed; and
-- transmission T301: constituted by the transmission component with the functions of clutch, and/or speed variable, and/or speed difference .

By way of the operations of the above units, if the common load body L400 is driven for operation, and the wheel groups W100 and W200 installed at the load perform speed differential operation, the continuous variable transmission CVT100 and the continuous variable transmission CVT200 individually perform speed ratio regulation according to the load variation of the wheel group W100 and the wheel group W200 installed at the load, to facilitate the speed differential operation drive between the wheel group W100 and the wheel group W200 installed at the load.

The system is also installed with the required fuel control unit FC100, the tank TANK100, and/or the engine speed detecting device SD100 for the control of the engine drive operation, including:
-- fuel control unit FC100: related to the power-driven servo unit and/or the mechanical/ and/or the current force- type drive unit for receiving the direct control from the central control unit CCU400 and/or the engine speed detecting device SD100 to control the fuel supply status of the engine ICE100, and to further control the rotational speed and the torque force of the engine ICE100;
-- tank TANK100: used for engine fuel storage, through the fuel pipeline and the fuel control unit FC100 between the tank TANK100 and the engine ICE100, for controlling the fuel to the engine ICE100; and
-- engine speed detecting device SD100: related to analog or digital rotational speed detecting device, which transfers the amount of angular displacement to the corresponding physical signal, and/or substituted by analog voltage value or frequency value of the generator G100, for transmitting the engine rotational speed signal to the central control unit CCU400, and/or directly controlling the fuel to the engine from the fuel control unit FC100, and/or the engine speed detecting device SD100 constituted by mechanical detecting structure, such as centrifugal type, mechanically interacting with the fuel control unit FC100 to control the operation of the engine ICE100; the above two types is selected according to the system features.

The hybrid power system installed with the electric storage-discharge unit FSD100, as shown in Fig. 4, includes one or more of the following operational functions, including:
1. the engine power system drives the wheel group W301 and the wheel group W401 to drive the common load body L400;
2. the engine power system drives the wheel group W301 and the wheel group W401 to drive the common load body L400, and to drive the generator G100 for charging the electric storage-discharge unit ESD100 simultaneously;
3. the power of the electric storage-discharge unit ESD100 is through the motor drive control circuit in the electric control unit ECU400 to control the motor M100 and the motor M200, or the kinetic energy is reclaimed and regenerated by the motor M100 and/or the motor M200 for charging back to the electric storage-discharge unit ESD100;
4. the power of the electric storage-discharge unit ESD100 is directly, or through the motor drive control circuit in the electric control unit ECU400 to control the motor M100 and the motor M200, so as to drive the wheel group W100 and the wheel group W200, and the engine power system drives the third wheel group W300 at output side and the fourth wheel group W400 at output side, for together driving the common load body L400;
5. the engine ICE100 operates within the fuel efficient operation range with lower fuel consumption and higher output power to achieve the best break specific fuel consumption, so as to drive the generator G100, and the generating power directly, or through the motor drive control circuit installed within the electric control unit ECU400, controls the driving operation of the motor M100 and the motor M200 to drive the common load body L400;
6. the electric storage-discharge unit ESD100 receives the generating power of the generator G100 driven by the engine ICE100 for charging, and/or the electric storage-discharge unit ESD100 is charged by the external power supply, and/or the electric storage-discharge unit ESD100 is charged by the regenerated power reclaimed and regenerated by the motor M100 and/or the motor M200; and
7. the power of the engine ICE100 individually drives the generator G100to charge the electric storage-discharge unit ESD100 or to output power externally.

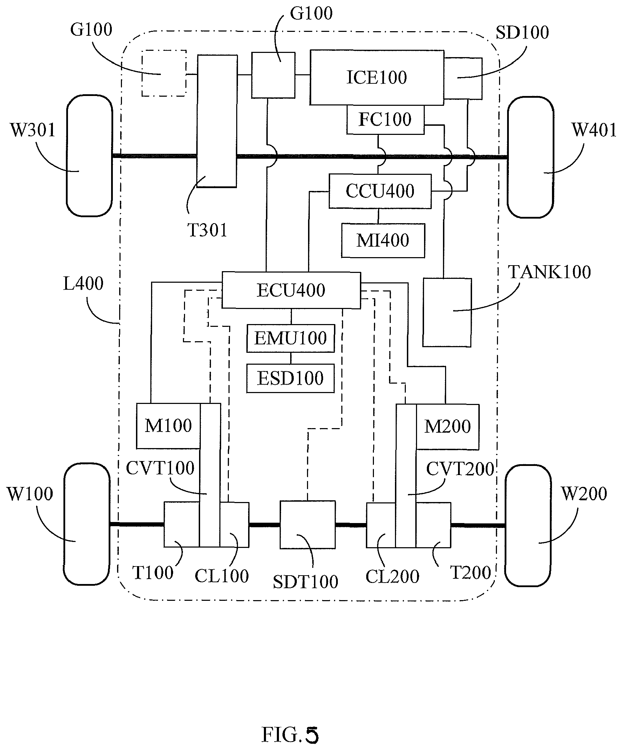

The multi-motor drive system with speed differential regulated by the continuous variable transmission and the engine power drive unit as shown in Fig. 4, the multi-motor drive system with speed differential regulated by the continuous variable transmission installed at the common load body L400, except for directly drives, the load by the continuous variable transmission, or drives the load by the continuous variable transmission and the transmission, furthermore, the clutch unit CL100 is additionally installed between the continuous variable transmission CVT100 and the transmission T100, and the clutch unit CL200 is additionally installed between the continuous variable transmission CVT200 and the transmission T200, to individually control the linking transmission or cutting separation between the continuous variable transmission CVT100 and the transmission T100, and between the continuous variable transmission CVT200 and the transmission T200. Fig. 5 is a schematic view showing an embodiment of the system in Fig. 4 to be additionally installed with clutch units;

As shown in Fig. 5, in which:
-- clutch units CL100, CL200: related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side.
-- stabilizing device SDT100: constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units CL100 and CL200 individually driven by the continuous variable transmissions CVT100 and CVT200, during driving operation, if the load at individual load side varies, or if the response time of the clutch units CL100 and CL200 at the loads individually driven by the continuous variable transmissions CVT100 and CVT200 is slower, or if the clutch units CL100 and CL200 operate unstably because of the synchronous response time difference thereof, the stabilizing device SDT100 installed between the loads of the clutch units CL100 and CL200 operates to stabilize the system.

Features:
There follows a list of numbered features defining particular embodiments of the invention. Where a numbered feature refers to an earlier numbered feature then those features may be considered in combination.
1. A individual-powered dual CVT differential system with stabilizing device, which is structured by that for the common load body (L100), the motor (M100) is installed to drive the wheel group (W100) placed at the load through the continuous variable transmission (CVT100) and the transmission (T100), and the motor (M200) is installed to drive the wheel group (W200) placed at the load through the continuous variable transmission (CVT200) and the transmission (T200), and the stabilizing device constituted by the torque limited coupling device with sliding damping during sliding is installed between the loads individually driven by the two CVTs of the motors, if the wheel group (W100) and the wheel group (W200) placed at the load are driven with speed differential, the continuous variable transmission (CVT100) and the continuous variable transmission (CVT200) automatically regulate the speed ratio with the load variation to coordinate with rotation differential between the wheel group (W100) and the wheel group (W200) at the load, and the stabilizing device stabilizes the operation between the loads individually driven by the two CVTs, in which:
   -- motors (M100), (M200): constituted by rotary motors, which are AC or DC, brushless or brush, synchronous or non-synchronous, internal or external rotation type;
   -- continuous variable transmissions (CVT100), (CVT200): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission;
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT100) and (CVT200), if unstable operation is caused by the varied load at individual load side during driving operation, the stabilizing device (SDT100) installed between the loads operates to stabilize the system;
   -- transmission (T100): related to fixed speed ratio, variable speed ratio, or stepless speed variable transmission, which is constituted by mechanical gear unit, sprocket unit, pulley unit, or linkage group; and the transmission is selectable as needed; and
   -- electric control unit (ECU100): constituted by the electric machine and/or the solid state power element, and/or the electronic element, and/or the microprocessor, and/or related software, for receiving the control of the user interface (MI100) and/or the central control unit (CCU100), wherein a motor drive control circuit is installed within the electric control unit (ECU100) for manipulating rotational speed, torque, rotary direction, and current of the parallel connected motors (M100) and (M200); or motor drive control circuits individually equipped to the motors (M100) and (M200) are individually installed within the electric control unit (ECU100) for individually manipulating rotational speed, torque, rotary direction, and current of the motors (M100) and (M200), which do not involve the close loop or semi- close loop rotational speed control between the two motors to achieve the speed differential function; the speed differential operation between the loads is through the continuous variable transmission installed between the individual motor and the load to perform speed difference regulation.
2. The individual-powered dual CVT differential system with stabilizing device as in feature 1, in which, if the continuous variable transmission which changes the speed ratio by receiving external manipulation is adopted by the system, the electric control unit (ECU100) includes the drive control circuit of the continuous variable transmission with the user interface (MI100) for accepting manual manipulation and/or controlled by the central control unit (CCU100);
   -- electric energy management unit (EMU100): constituted by the electric machine, and/or solid state power element, and/or electronic element, and/or microprocessor, and/or related software, for controlling the output voltage, the current and the charging voltage and current of the electric storage-discharge unit (ESD100), to start and stop the timing of charging;
   -- central control unit (CCU100): related to analog or digital, or both mixed control device, constituted by the electric machine and/or solid state power element, and/or including microprocessor, and/or control software, and/or related circuit element, for following the command of the user interface (MI100), and/or for setting control mode to further control the operation of the system;
   -- user interface (MI100): related to linear analog or digital, or both mixed control device, constituted by the operating mechanism, and/or the electric machine, and/or the solid state circuit, for linking with the central control unit (CCU100) to control the operation of the system; and
   -- electric storage-discharge unit (ESD100): constituted by various rechargeable secondary battery, or capacitor, or super capacitor.
3. The individual-powered dual CVT differential system with stabilizing device as in feature 1, in which, except for directly driving the load through CVT, or driving the load through CVT and the transmission, furthermore, the clutch unit (CL100) is additionally installed between the continuous variable transmission (CVT100) and the transmission (T100), and the clutch unit (CL200) is additionally installed between the continuous variable transmission (CVT200) and the transmission (T200); the clutch units (CL100) and (CL200) installed between the continuous variable transmission (CVT100) and the transmission (T100), and between the continuous variable transmission (CVT200) and the transmission (T200), are used to individually control the linking transmission or cutting separation between the continuous variable transmission (CVT100) and the transmission (T100), and between the continuous variable transmission (CVT200) and the transmission (T200); wherein:
   -- clutch units (CL100), (CL200): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system.
4. The individual-powered dual CVT differential system with stabilizing device as in feature 1, wherein two or more than two sets of the individual-powered dual CVT differential systems with stabilizing device are further applied to the four- or more-wheel drive system, the main components are as following:
   -- common load body (L200): the common load body L200 is installed with two sets of the individual-powered dual CVT differential systems with stabilizing device, in which the first set of the individual-powered dual CVT differential system with stabilizing device is installed at the front end of the common load body (L200), and the second set of the individual-powered dual CVT differential system with stabilizing device is installed at the rear end of the common load body (L200), wherein:
   the first set of the individual-powered dual CVT differential system with stabilizing device includes:
   -- motors (M100), (M200): constituted by rotary motors, which are AC or DC, brushless or brush, synchronous or non-synchronous, internal or external rotation type;
   -- continuous variable transmissions (CVT100), (CVT200): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT 100) and (CVT200), if unstable operation is caused by the varied load at individual load side during driving operation, the stabilizing device (SDT100) installed between the loads operates to stabilize the system;
   -- transmissions (T100), (T200): related to fixed speed ratio, variable speed ratio, or stepless speed variable transmissions, which are constituted by mechanical gear units, sprocket units, pulley units, or linkage groups; and the transmissions are selectable as needed;
   the second set of the individual-powered dual CVT differential system with stabilizing device includes:
   -- motors (M300), (M400): constituted by rotary motors, which are AC or DC, brushless or brush, synchronous or non-synchronous, internal or external rotation type;
   -- continuous variable transmissions (CVT300), (CVT400): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device (SDT200): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT300) and (CVT400), if unstable operation is caused by the varied load at individual load side during driving operation, the stabilizing device (SDT200) installed between the loads operates to stabilize the system;
   -- transmissions (T300), (T400): related to fixed speed ratio, variable speed ratio, or stepless speed variable transmissions, which are constituted by mechanical gear units, sprocket units, pulley units, or linkage groups; and
   -- electric control unit (ECU200): constituted by electric machine and/or solid state power element, and/or electronic element, and/or microprocessor, and/or related software, for receiving the control of the user interface (MI200) and/or the central control unit (CCU200), wherein a motor drive control circuit is installed within the electric control unit (ECU200) for manipulating rotational speed, torque, rotary direction, and current of the parallel connected motors (M100) and (M200), and (M300) and (M400); or two motor drive control circuits are installed within the electric control unit (ECU200), in which one motor drive control circuit is used to control the parallel connected motors (M100) and (M200), including controlling the rotational speed, torque, rotary direction, and current of the motors (M100) and (M200), and the other motor drive control circuit is used to control the parallel connected motors (M300) and (M400), including controlling the rotational speed, torque, rotary direction, and current of the motors (M300) and (M400); or motor drive control circuits are individually arranged for motors (M100), (M200), (M300), and (M400) individually installed within the electric control unit (ECU200), for individually manipulating rotational speed, torque, rotary direction, and current of the motors (M100), (M200), (M300), and (M400), which do not involve the close loop or semi- close loop rotational speed control between the two motors to achieve the speed differential function; the speed differential operation between the loads is through the continuous variable transmission installed between the individual motor and the load to perform speed difference regulation.
5. The individual-powered dual CVT differential system with stabilizing device as in feature 4, in which, if the continuous variable transmission which changes the speed ratio by receiving external manipulation is adopted by the system, the electric control unit (ECU200) includes the drive control circuit of the continuous variable transmission with the user interface (MI200) for accepting manual manipulation and/or controlled by the central control unit (CCU200);
   -- electric energy management unit (EMU100): constituted by the electric machine, and/or solid state power element, and/or electronic element, and/or microprocessor, and/or related software, for controlling the output voltage, the current and the charging voltage and current of the electric storage-discharge unit (ESD100), to start and stop the timing of charging;
   -- central control unit (CCU200): related to analog or digital, or both mixed control device, constituted by the electric machine and/or solid state power element, and/or including microprocessor, and/or control software, and/or related circuit element, for following the command of the user interface (MI200), and/or for setting control mode and further controlling the operation of the system;
   -- user interface (MI200): related to linear analog or digital, or both mixed control device, constituted by the operating mechanism, and/or the electric machine, and/or the solid state circuit, for linking with the central control unit (CCU200) to control the operations of the first set of the individual-powered dual CVT differential system with stabilizing device, and the second set of the individual-powered dual CVT differential system with stabilizing device in turn; and
   -- electric storage-discharge unit (ESD100): constituted by various rechargeable secondary battery, or capacitor, or super capacitor.
6. The individual-powered dual CVT differential system with stabilizing device as in feature 4, in which, except for directly driving the load through CVT, or driving the load through CVT and the transmission, furthermore, the clutch unit (CL100) is additionally installed between the continuous variable transmission (CVT100) and the transmission (T100), and the clutch unit (CL200) is additionally installed between the continuous variable transmission (CVT200) and the transmission (T200), and for the second set of the individual-powered dual CVT differential system with stabilizing device, the clutch unit (CL300) is additionally installed between the continuous variable transmission (CVT300) and the transmission (T300), and the clutch unit (CL400) is additionally installed between the continuous variable transmission (CVT400) and the transmission (T400);
   the clutch units (CL100) and (CL200) installed between the continuous variable transmission (CVT100) and the transmission (T100), and between the continuous variable transmission (CVT200) and the transmission (T200), are used to individually control the linking transmission or cutting separation between the continuous variable transmission (CVT100) and the transmission (T100), and between the continuous variable transmission (CVT200) and the transmission (T200);
   the clutch units (CL300) and (CL400) installed between the continuous variable transmission (CVT300) and the transmission (T300), and between the continuous variable transmission (CVT400) and the transmission (T400), are used to individually control the linking transmission or cutting separation between the continuous variable transmission (CVT300) and the transmission (T300), and between the continuous variable transmission (CVT400) and the transmission (T400); in which
      -- clutch units (CL100), (CL200), (CL300), (CL400): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
      -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system;
      -- stabilizing device (SDT200): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL300) and (CL400) individually driven by the continuous variable transmissions (CVT300) and (CVT400), during driving operation, if the load at individual load side varies, or if the response time of the clutch units (CL300) and (CL400) at the loads individually driven by the continuous variable transmissions (CVT300) and (CVT400) is slower, or if the clutch units (CL300) and (CL400) operate unstably because of the synchronous response time difference thereof, the stabilizing device (SDT200) installed between the loads of the clutch units (CL300) and (CL400) operates to stabilize the system.
7. The individual-powered dual CVT differential system with stabilizing device as in feature 1, wherein the system is further applied to the hybrid power drive system; the main components are as following:
   -- common load body (L300): one end of the common load is installed with the multi-motor drive system with speed differential regulated by the continuous variable transmission (CVT100) and the continuous variable transmission (CVT200);
      the other end of the common load body (L300) is installed with an engine power system constituted by an engine (ICE100) and a transmission (T301) with the functions of clutch, speed variable, and speed difference, for the wheel group (W301) and the wheel group (W401) driving the load through the transmission (T301);
   -- motors (M100), (M200): constituted by rotary motors, which are AC or DC, brushless or brush, synchronous or non-synchronous, internal or external rotation type;
   -- generator (G100): constituted by the rotary generator, which are AC or DC, brushless or brush, synchronous or non-synchronous, internal or external rotation type; in which the generator (G100) is installed between the engine (ICE100) and the transmission (T301), or at the engine (ICE100) non-coupling side of the transmission (T301), or at the output side of the transmission (T301) coupled and driven by the engine (ICE100);
   -- continuous variable transmissions (CVT100), (CVT200): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT100) and (CVT200), if unstable operation is caused by the varied load at individual load side during driving operation, the stabilizing device (SDT100) installed between the loads operates to stabilize the system;
   -- electric control unit (ECU300): constituted by the electric machine and/or the solid state power element, and/or the electronic element, and/or the microprocessor, and/or related software, for receiving the control of the user interface (MI300) and/or the central control unit (CCU300), to control the power generation operation timing of the generator (G100) and the voltage and current of the generating power, in which one motor drive control circuit is installed within the electric control unit (ECU300) to control the rotational speed, torque, rotary direction, and current of the parallel connected motors (M100) and (M200); or motor drive control circuits individually equipped to the motors (M100) and (M200) are individually installed within the electric control unit (ECU300) to individually control the rotational speed, torque, rotary direction, and current of the motors (M100) and (M200), which do not involve the close loop or semi- close loop rotational speed control between the two motors to achieve the speed differential function; the speed differential operation between the loads is through the continuous variable transmission installed between the individual motor and the load to perform speed difference regulation;
      if the continuous variable transmission which changes the speed ratio by receiving external manipulation is adopted by the system, the electric control unit (ECU300) includes the drive control circuit of the continuous variable transmission with the user interface (MI300) for accepting manual manipulation and/or controlled by the central control unit (CCU300);
   -- central control unit (CCU300): related to analog or digital, or both mixed control device, constituted by the electric machine and/or the solid state power element, and/or the microprocessor including control software, and/or related circuit element, for following the command of the user interface (MI300), or for setting control mode, and/or the feedback signal of the engine speed detecting device (SD100) to further control the operation of the system;
   -- user interface (MI300): related to linear analog or digital, or both mixed control device, constituted by the operating mechanism, and/or the electric machine, and/or the solid state circuit, for linking with the central control unit (CCU300) to control the operation of the multi-motor drive system with speed differential regulated by the continuous variable transmission (CVT100) and the continuous variable transmission (CVT200), and the operation of the engine power system;
   -- transmissions (T100), (T200): related to fixed speed ratio, variable speed ratio, or stepless speed variable transmissions, which are constituted by mechanical gear units, sprocket units, pulley units, or linkage groups; and the transmissions are selectable as needed; and
   -- transmission (T301): constituted by the transmission component with the functions of clutch, and/or speed variable, and/or speed difference ;
      by way of the operations of the above units, if the common load body (L300) is driven for operation, and the wheel groups (W100) and (W200) installed at the load perform speed differential operation, the continuous variable transmission (CVT100) and the continuous variable transmission (CVT200) individually perform speed ratio regulation according to the load variation of the wheel group (W100) and the wheel group (W200) installed at the load, to facilitate the speed differential operation drive between the wheel group (W100) and the second wheel group (W200) installed at the load;
      the system is also installed with the required fuel control unit (FC100), the tank (TANK100), and/or the engine speed detecting device (SD100) for the control of the engine drive operation, including:
   -- fuel control unit (FC100): related to the power-driven servo unit and/or the mechanical and/or the current force- type drive unit for receiving the direct control from the central control unit (CCU300) and/or the engine speed detecting device (SD100) to control the fuel supply status of the engine (ICE100), and to further control the rotational speed and the torque force of the engine (ICE100);
   -- tank (TANK100): used for engine fuel storage, through the fuel pipeline and the fuel control unit (FC100) between the tank (TANK100) and the engine (ICE100), for controlling the fuel to the engine (ICE100); and
   -- engine speed detecting device (SD100): related to analog or digital rotational speed detecting device, which transfers the amount of angular displacement to the corresponding physical signal, and/or substituted by analog voltage value or frequency value of the generator (G100), for transmitting the engine rotational speed signal to the central control unit (CCU300), and/or directly controlling the fuel to the engine from the fuel control unit (FC100), and/or the engine speed detecting device (SD100) constituted by mechanical detecting structure, such as centrifugal type, mechanically interacting with the fuel control unit (FC100) to control the operation of the engine (ICE100); the above two types is selected according to the system features.
8. The individual-powered dual CVT differential system with stabilizing device as in feature 7, which constituting a hybrid power system, wherein the system includes one or more of the following operational functions, including:
   -- the power system, driven by the engine (ICE100), drives the wheel group (W301) and the wheel group (W401)to drive the common load body (L300); and/or
   -- the engine (ICE100) operates within the fuel efficient operation range with lower fuel consumption and higher output power to achieve the best break specific fuel consumption, so as to drive the generator (G100), and the generating power directly, or through the motor drive control circuit installed within the electric control unit (ECU300), controls the driving operation of the motor (M100) and the motor (M200) to drive the common load body (L300).
9. The individual-powered dual CVT differential system with stabilizing device as in feature 8, further installed with clutch units, in which:
   -- clutch units (CL100), (CL200): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system.
10. The individual-powered dual CVT differential system with stabilizing device as in feature 8, when applied to the hybrid power system, it is further installed with the electric storage-discharge unit (ESD100), which is used to receive the generating power of the generator (G100) driven by the engine (ICE100) for charging, and/or to receive the power of the regenerated electricity from kinetic energy reclaimed by the motor (M100) and/or the motor (M200) for charging, and/or to receive the external power supply for charging, by way of the power provided by the electric storage-discharge unit (ESD100) and/or the power generated by the generator (G100), through the motor drive control circuit in the electric control unit (ECU400), to control the driving operations of the motor (M100) and the motor (M200), the components including:
   -- common load body (L400): one end of the common load is installed with the multi-motor drive system with speed differential regulated by the continuous variable transmission (CVT100) and the continuous variable transmission (CVT200);
   -- the other end of the common load body (L400) is installed with an engine power system constituted by an engine (ICE100) and a transmission (T301) with the functions of clutch, speed variable, and speed difference, for the wheel group (W301) and the wheel group (W401) driving the load through the transmission (T301);
   -- motors (M100), (M200): constituted by rotary motors, which are AC or DC, brushless or brush, synchronous or non-synchronous, internal or external rotation type;
   -- generator (G100): constituted by the rotary generator, which are AC or DC, brushless or brush, synchronous or non-synchronous, internal or external rotation type; in which the generator (G100) is installed between the engine (ICE100) and the transmission (T301), or at the engine (ICE100) non-coupling side of the transmission (T301), or at the output side of the transmission (T301) coupled and driven by the engine (ICE100);
   -- continuous variable transmissions (CVT100), (CVT200): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT100) and (CVT200), if unstable operation is caused by the varied load at individual load side during driving operation, the stabilizing device (SDT100) installed between the loads operates to stabilize the system;
   -- electric control unit (ECU400): constituted by the electric machine and/or the solid state power element, and/or the electronic element, and/or the microprocessor, and/or related software, for receiving the control of the user interface (MI400) and/or the central control unit (CCU400), to control the power generation operation timing of the generator (G100) and the voltage and current of the generating power, in which one motor drive control circuit is installed within the electric control unit (ECU400) to control the rotational speed, torque, rotary direction, and current of the parallel connected motors (M100) and (M200); or motor drive control circuits individually equipped to the motors (M100) and (M200) are individually installed within the electric control unit (ECU400) to individually control the rotational speed, torque, rotary direction, and current of the motors (M100) and (M200), which do not involve the close loop or semi- close loop speed rotational control between the two motors to achieve the speed differential function; the speed differential operation between the loads is through the continuous variable transmission installed between the individual motor and the load to perform speed difference regulation;
      if the continuous variable transmission which changes the speed ratio by receiving external manipulation is adopted by the system, the electric control unit (ECU400) includes the drive control circuit of the continuous variable transmission with the user interface (MI400) for accepting manual manipulation and/or controlled by the central control unit (CCU400);
   -- electric energy management unit (EMU100): constituted by the electric machine and/or the solid state power element, and/or the electronic element, and/or the microprocessor, and/or related software, for controlling the output voltage, the current and the charging voltage and current of the electric storage-discharge unit (ESD100), to start and stop the timing of charging;
   -- electric storage-discharge unit (ESD100): constituted by various rechargeable secondary battery, or capacitor, or super capacitor;
   -- central control unit (CCU400): related to analog or digital, or both mixed control device, constituted by the electric machine and/or the solid state power element, and/or the microprocessor including control software, and/or related circuit element, for following the command of the user interface MI400, or for setting control mode, and/or the feedback signal of the engine speed detecting device (SD100) to further control the operation of the system;
   -- user interface (MI400): related to linear analog or digital, or both mixed control device, constituted by the operating mechanism, and/or the electric machine, and/or the solid state circuit, for linking with the central control unit (CCU400) to control the operation of the multi-motor drive system with speed differential regulated by the continuous variable transmission (CVT100) and the continuous variable transmission (CVT200), and the operation of the engine power system, so as to drive the common load body L400;
   -- transmissions (T100), (T200): related to fixed speed ratio, variable speed ratio, or stepless speed variable transmissions, which are constituted by mechanical gear units, sprocket units, pulley units, or linkage groups; and the transmissions are selectable as needed; and
   -- transmission (T301): constituted by the transmission component with the functions of clutch, and/or speed variable, and/or speed difference ;
      by way of the operations of the above units, if the common load body (L400) is driven for operation, and the wheel groups (W100) and (W200) installed at the load perform speed differential operation, the continuous variable transmission (CVT100) and the continuous variable transmission (CVT200) individually perform speed ratio regulation according to the load variation of the wheel group (W100) and the wheel group (W200) installed at the load, to facilitate the speed differential operation drive between the wheel group (W100) and the wheel group (W200) installed at the load;
      the system is also installed with the required fuel control unit (FC100), the tank (TANK100), and/or the engine speed detecting device (SD100) for the control of the engine drive operation, including:
   -- fuel control unit (FC100): related to the power-driven servo unit and/or the mechanical/ and/or the current force- type drive unit for receiving the direct control from the central control unit (CCU400) and/or the engine speed detecting device (SD100) to control the fuel supply status of the engine (ICE100), and to further control the rotational speed and the torque force of the engine (ICE100);
   -- tank (TANK100): used for engine fuel storage, through the fuel pipeline and the fuel control unit (FC100) between the tank (TANK100) and the engine (ICE100), for controlling the fuel to the engine (ICE100); and
   -- engine speed detecting device (SD100): related to analog or digital rotational speed detecting device, which transfers the amount of angular displacement to the corresponding physical signal, and/or substituted by analog voltage value or frequency value of the generator (G100), for transmitting the engine rotational speed signal to the central control unit (CCU400), and/or directly controlling the fuel to the engine from the fuel control unit (FC100), and/or the engine speed detecting device (SD100) constituted by mechanical detecting structure, such as centrifugal type, mechanically interacting with the fuel control unit (FC100) to control the operation of the engine (ICE100); the above two types is selected according to the system features.
11. The individual-powered dual CVT differential system with stabilizing device as in feature 10, the hybrid power system installed with the electric storage-discharge unit (ESD100) includes one or more of the following operational functions, including:
   1) the engine power system drives the wheel group (W301) and the wheel group (W401) to drive the common load body (L400);
   2) the engine power system drives the wheel group (W301) and the wheel group (W401) to drive the common load body (L400), and to drive the generator (G100) for charging the electric storage-discharge unit (ESD100) simultaneously;
   3) the power of the electric storage-discharge unit (ESD100) is through the motor drive control circuit in the electric control unit (ECU400) to control the motor (M100) and the motor (M200), or the kinetic energy is reclaimed and regenerated by the motor (M100) and/or the motor (M200) for charging back to the electric storage-discharge unit (ESD100);
   4) the power of the electric storage-discharge unit (ESD100) is directly, or through the motor drive control circuit in the electric control unit (ECU400) to control the motor (M100) and the motor (M200), so as to drive the wheel group (W100) and the wheel group (W200), and the engine power system drives the third wheel group (W300) at output side and the fourth wheel group (W400) at output side, for together driving the common load body (L400);
   5) the engine (ICE100) operates within the fuel efficient operation range with lower fuel consumption and higher output power to achieve the best break specific fuel consumption, so as to drive the generator (G100), and the generating power directly, or through the motor drive control circuit installed within the electric control unit (ECU400), controls the driving operation of the motor (M100) and the motor (M200) to drive the common load body (L400);
   6) the electric storage-discharge unit (ESD100) receives the generating power of the generator (G100) driven by the engine (ICE100) for charging, and/or the electric storage-discharge unit (ESD100) is charged by the external power supply, and/or the electric storage-discharge unit (ESD100) is charged by the regenerated power reclaimed and regenerated by the motor (M100) and/or the motor (M200); and
   7) the power of the engine (ICE100) individually drives the generator (G100)to charge the electric storage-discharge unit (ESD100) or to output power externally.
12. The individual-powered dual CVT differential system with stabilizing device as in feature 11, wherein the multi-motor drive system with speed differential regulated by the continuous variable transmission installed at the common load body (L400) in said multi-motor drive system with speed differential regulated by the continuous variable transmission and the engine power drive unit, except for directly drives, the load by the continuous variable transmission, or drives the load by the continuous variable transmission and the transmission, furthermore, the clutch unit (CL100) is additionally installed between the continuous variable transmission (CVT100) and the transmission (T100), and the clutch unit (CL200) is additionally installed between the continuous variable transmission (CVT200) and the transmission (T200), to individually control the linking transmission or cutting separation between the continuous variable transmission (CVT100) and the transmission (T100), and between the continuous variable transmission (CVT200) and the transmission (T200), wherein:
   -- clutch units (CL100), (CL200): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
   -- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system.
13. A multi-motor driving system for driving a common load body (L100) comprising :
   a first motor (M100) arranged to drive a first wheel (W100);
   a first continuously variable transmission (CVT100) disposed between first motor (M100) and the first wheel (W100);
   a second motor (M200) arranged to drive a second wheel (W200);
   a second motor continuously variable transmission (CVT100) disposed between the second motor (M200) and the second wheel (W200); and
   a torque limited coupling device (SDT100) disposed between the first and second wheels.

## Claims

1. A multi-motor hybrid power driving system for driving a common load body (L300, L400) comprising:
a first motor (M100) arranged to drive a first wheel (W100);
a first continuously variable transmission (CVT100) disposed between the first motor (M100) and the first wheel (W100);
a second motor (M200) arranged to drive a second wheel (W200);
a second continuously variable transmission (CVT200) disposed between the second motor (M200) and the second wheel (W200);
a torque limited coupling device (SDT100) disposed between the first and second wheels (W100, W200);
an engine (ICE100) arranged to drive a third wheel (W301) and a fourth wheel (W401); and
a transmission (T301) disposed between the engine (ICE100) and each of the third wheel (W301) and the fourth wheel (W401),
wherein the transmission (T301) is arranged to transfer power output from the engine to each of the third wheel (W301) and the fourth wheel (W401) simultaneously.

2. The individual-powered dual CVT differential system with stabilizing device as claimed in Claim 1, wherein the system further comprises:
-- motors (M100), (M200): constituted by rotary motors, which are AC or DC, brushless or brush, synchronous or non-synchronous, internal or external rotation type;
-- generator (G100): constituted by the rotary generator, which are AC or DC, brushless or brush, synchronous or non-synchronous, internal or external rotation type; in which the generator (G100) is installed between the engine (ICE100) and the transmission (T301), or at the engine (ICE100) non-coupling side of the transmission (T301), or at the output side of the transmission (T301) coupled and driven by the engine (ICE100);
-- electric control unit (ECU300): constituted by the electric machine and/or the solid state power element, and/or the electronic element, and/or the microprocessor, and/or related software, for receiving the control of the user interface (MI300) and/or the central control unit (CCU300), to control the power generation operation timing of the generator (G100) and the voltage and current of the generating power, in which one motor drive control circuit is installed within the electric control unit (ECU300) to control the rotational speed, torque, rotary direction, and current of the parallel connected motors (M100) and (M200); or motor drive control circuits individually equipped to the motors (M100) and (M200) are individually installed within the electric control unit (ECU300) to individually control the rotational speed, torque, rotary direction, and current of the motors (M100) and (M200), which do not involve the close loop or semi- close loop rotational speed control between the two motors to achieve the speed differential function; the speed differential operation between the loads is through the continuous variable transmission installed between the individual motor and the load to perform speed difference regulation;
if the continuous variable transmission which changes the speed ratio by receiving external manipulation is adopted by the system, the electric control unit (ECU300) includes the drive control circuit of the continuous variable transmission with the user interface (MI300) for accepting manual manipulation and/or controlled by the central control unit (CCU300);
-- central control unit (CCU300): related to analog or digital, or both mixed control device, constituted by the electric machine and/or the solid state power element, and/or the microprocessor including control software, and/or related circuit element, for following the command of the user interface (MI300), or for setting control mode, and/or the feedback signal of the engine speed detecting device (SD100) to further control the operation of the system;
-- user interface (MI300): related to linear analog or digital, or both mixed control device, constituted by the operating mechanism, and/or the electric machine, and/or the solid state circuit, for linking with the central control unit (CCU300) to control the operation of the multi-motor drive system with speed differential regulated by the continuous variable transmission (CVT100) and the continuous variable transmission (CVT200), and the operation of the engine power system; and
-- transmissions (T100), (T200): related to fixed speed ratio, variable speed ratio, or stepless speed variable transmissions, which are constituted by mechanical gear units, sprocket units, pulley units, or linkage groups; and the transmissions are selectable as needed;
by way of the operations of the above units, if the common load body (L300) is driven for operation, and the wheel groups (W100) and (W200) installed at the load perform speed differential operation, the continuous variable transmission (CVT100) and the continuous variable transmission (CVT200) individually perform speed ratio regulation according to the load variation of the wheel group (W100) and the wheel group (W200) installed at the load, to facilitate the speed differential operation drive between the wheel group (W100) and the second wheel group (W200) installed at the load;
the system is also installed with the required fuel control unit (FC100), the tank (TANK100), and/or the engine speed detecting device (SD100) for the control of the engine drive operation, including:
-- fuel control unit (FC100): related to the power-driven servo unit and/or the mechanical and/or the current force- type drive unit for receiving the direct control from the central control unit (CCU300) and/or the engine speed detecting device (SD100) to control the fuel supply status of the engine (ICE100), and to further control the rotational speed and the torque force of the engine (ICE100);
-- tank (TANK100): used for engine fuel storage, through the fuel pipeline and the fuel control unit (FC100) between the tank (TANK100) and the engine (ICE 100), for controlling the fuel to the engine (ICE 100); and
-- engine speed detecting device (SD100): related to analog or digital rotational speed detecting device, which transfers the amount of angular displacement to the corresponding physical signal, and/or substituted by analog voltage value or frequency value of the generator (G100), for transmitting the engine rotational speed signal to the central control unit (CCU300), and/or directly controlling the fuel to the engine from the fuel control unit (FC100), and/or the engine speed detecting device (SD100) constituted by mechanical detecting structure, such as centrifugal type, mechanically interacting with the fuel control unit (FC100) to control the operation of the engine (ICE100); the above two types is selected according to the system features.

3. The individual-powered dual CVT differential system with stabilizing device as claimed in Claim 2, wherein the system includes one or more of the following operational functions, including:
-- the power system, driven by the engine (ICE100), drives the wheel group (W301) and the wheel group (W401)to drive the common load body (L300); and/or
-- the engine (ICE100) operates within the fuel efficient operation range with lower fuel consumption and higher output power to achieve the best break specific fuel consumption, so as to drive the generator (G100), and the generating power directly, or through the motor drive control circuit installed within the electric control unit (ECU300), controls the driving operation of the motor (M100) and the motor (M200) to drive the common load body (L300).

4. The individual-powered dual CVT differential system with stabilizing device as claimed in Claim 3, further installed with clutch units, in which:
-- clutch units (CL100), (CL200): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
-- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system.

5. The individual-powered dual CVT differential system with stabilizing device as claimed in Claim 3, further installed with the electric storage-discharge unit (ESD100), which is used to receive the generating power of the generator (G100) driven by the engine (ICE100) for charging, and/or to receive the power of the regenerated electricity from kinetic energy reclaimed by the motor (M100) and/or the motor (M200) for charging, and/or to receive the external power supply for charging, by way of the power provided by the electric storage-discharge unit (ESD100) and/or the power generated by the generator (G100), through the motor drive control circuit in the electric control unit (ECU400), to control the driving operations of the motor (M100) and the motor (M200), the components including:
-- common load body (L400): one end of the common load is installed with the multi-motor drive system with speed differential regulated by the continuous variable transmission (CVT100) and the continuous variable transmission (CVT200);
-- the other end of the common load body (L400) is installed with an engine power system constituted by an engine (ICE100) and a transmission (T301) with the functions of clutch, speed variable, and speed difference, for the wheel group (W301) and the wheel group (W401) driving the load through the transmission (T301);
-- motors (M100), (M200): constituted by rotary motors, which are AC or DC, brushless or brush, synchronous or non-synchronous, internal or external rotation type;
-- generator (G100): constituted by the rotary generator, which are AC or DC, brushless or brush, synchronous or non-synchronous, internal or external rotation type; in which the generator (G100) is installed between the engine (ICE100) and the transmission (T301), or at the engine (ICE100) non-coupling side of the transmission (T301), or at the output side of the transmission (T301) coupled and driven by the engine (ICE100);
-- continuous variable transmissions (CVT100), (CVT200): related to continuous variable transmissions, which can automatically change the speed ratio according to the load state, or change the speed ratio in receiving external manipulation, including a variety of types, such as rubber belt type, metal belt type, and chain type CVT, or the electronic continuous variable transmission (ECVT), or the friction disk type, or the conventional iso-axis continuous variable transmission; and
-- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between the loads of the continuous variable transmissions (CVT100) and (CVT200), if unstable operation is caused by the varied load at individual load side during driving operation, the stabilizing device (SDT100) installed between the loads operates to stabilize the system;
-- electric control unit (ECU400): constituted by the electric machine and/or the solid state power element, and/or the electronic element, and/or the microprocessor, and/or related software, for receiving the control of the user interface (MI400) and/or the central control unit (CCU400), to control the power generation operation timing of the generator (G100) and the voltage and current of the generating power, in which one motor drive control circuit is installed within the electric control unit (ECU400) to control the rotational speed, torque, rotary direction, and current of the parallel connected motors (M100) and (M200); or motor drive control circuits individually equipped to the motors (M100) and (M200) are individually installed within the electric control unit (ECU400) to individually control the rotational speed, torque, rotary direction, and current of the motors (M100) and (M200), which do not involve the close loop or semi- close loop speed rotational control between the two motors to achieve the speed differential function; the speed differential operation between the loads is through the continuous variable transmission installed between the individual motor and the load to perform speed difference regulation;
if the continuous variable transmission which changes the speed ratio by receiving external manipulation is adopted by the system, the electric control unit (ECU400) includes the drive control circuit of the continuous variable transmission with the user interface (MI400) for accepting manual manipulation and/or controlled by the central control unit (CCU400);
-- electric energy management unit (EMU100): constituted by the electric machine and/or the solid state power element, and/or the electronic element, and/or the microprocessor, and/or related software, for controlling the output voltage, the current and the charging voltage and current of the electric storage-discharge unit (ESD100), to start and stop the timing of charging;
-- electric storage-discharge unit (ESD100): constituted by various rechargeable secondary battery, or capacitor, or super capacitor;
-- central control unit (CCU400): related to analog or digital, or both mixed control device, constituted by the electric machine and/or the solid state power element, and/or the microprocessor including control software, and/or related circuit element, for following the command of the user interface MI400, or for setting control mode, and/or the feedback signal of the engine speed detecting device (SD100) to further control the operation of the system;
-- user interface (MI400): related to linear analog or digital, or both mixed control device, constituted by the operating mechanism, and/or the electric machine, and/or the solid state circuit, for linking with the central control unit (CCU400) to control the operation of the multi-motor drive system with speed differential regulated by the continuous variable transmission (CVT100) and the continuous variable transmission (CVT200), and the operation of the engine power system, so as to drive the common load body L400;
-- transmissions (T100), (T200): related to fixed speed ratio, variable speed ratio, or stepless speed variable transmissions, which are constituted by mechanical gear units, sprocket units, pulley units, or linkage groups; and the transmissions are selectable as needed; and
-- transmission (T301): constituted by the transmission component with the functions of clutch, and/or speed variable, and/or speed difference ;
by way of the operations of the above units, if the common load body (L400) is driven for operation, and the wheel groups (W100) and (W200) installed at the load perform speed differential operation, the continuous variable transmission (CVT100) and the continuous variable transmission (CVT200) individually perform speed ratio regulation according to the load variation of the wheel group (W100) and the wheel group (W200) installed at the load, to facilitate the speed differential operation drive between the wheel group (W100) and the wheel group (W200) installed at the load;
the system is also installed with the required fuel control unit (FC100), the tank (TANK100), and/or the engine speed detecting device (SD100) for the control of the engine drive operation, including:
-- fuel control unit (FC100): related to the power-driven servo unit and/or the mechanical/ and/or the current force- type drive unit for receiving the direct control from the central control unit (CCU400) and/or the engine speed detecting device (SD100) to control the fuel supply status of the engine (ICE100), and to further control the rotational speed and the torque force of the engine (ICE100);
-- tank (TANK100): used for engine fuel storage, through the fuel pipeline and the fuel control unit (FC100) between the tank (TANK100) and the engine (ICE100), for controlling the fuel to the engine (ICE100); and
-- engine speed detecting device (SD100): related to analog or digital rotational speed detecting device, which transfers the amount of angular displacement to the corresponding physical signal, and/or substituted by analog voltage value or frequency value of the generator (G100), for transmitting the engine rotational speed signal to the central control unit (CCU400), and/or directly controlling the fuel to the engine from the fuel control unit (FC100), and/or the engine speed detecting device (SD100) constituted by mechanical detecting structure, such as centrifugal type, mechanically interacting with the fuel control unit (FC100) to control the operation of the engine (ICE100); the above two types is selected according to the system features.

6. The individual-powered dual CVT differential system with stabilizing device as claimed in Claim 5, the hybrid power system installed with the electric storage-discharge unit (ESD100) includes one or more of the following operational functions, including:
1) the engine power system drives the wheel group (W301) and the wheel group (W401) to drive the common load body (L400);
2) the engine power system drives the wheel group (W301) and the wheel group (W401) to drive the common load body (L400), and to drive the generator (G100) for charging the electric storage-discharge unit (ESD100) simultaneously;
3) the power of the electric storage-discharge unit (ESD100) is through the motor drive control circuit in the electric control unit (ECU400) to control the motor (M100) and the motor (M200), or the kinetic energy is reclaimed and regenerated by the motor (M100) and/or the motor (M200) for charging back to the electric storage-discharge unit (ESD100);
4) the power of the electric storage-discharge unit (ESD100) is directly, or through the motor drive control circuit in the electric control unit (ECU400) to control the motor (M100) and the motor (M200), so as to drive the wheel group (W100) and the wheel group (W200), and the engine power system drives the third wheel group (W300) at output side and the fourth wheel group (W400) at output side, for together driving the common load body (L400);
5) the engine (ICE100) operates within the fuel efficient operation range with lower fuel consumption and higher output power to achieve the best break specific fuel consumption, so as to drive the generator (G100), and the generating power directly, or through the motor drive control circuit installed within the electric control unit (ECU400), controls the driving operation of the motor (M100) and the motor (M200) to drive the common load body (L400);
6) the electric storage-discharge unit (ESD100) receives the generating power of the generator (G100) driven by the engine (ICE100) for charging, and/or the electric storage-discharge unit (ESD100) is charged by the external power supply, and/or the electric storage-discharge unit (ESD100) is charged by the regenerated power reclaimed and regenerated by the motor (M100) and/or the motor (M200); and
7) the power of the engine (ICE100) individually drives the generator (G100)to charge the electric storage-discharge unit (ESD100) or to output power externally.

7. The individual-powered dual CVT differential system with stabilizing device as claimed in Claim 6, wherein the multi-motor drive system with speed differential regulated by the continuous variable transmission installed at the common load body (L400) in said multi-motor drive system with speed differential regulated by the continuous variable transmission and the engine power drive unit, except for directly drives, the load by the continuous variable transmission, or drives the load by the continuous variable transmission and the transmission, furthermore, the clutch unit (CL100) is additionally installed between the continuous variable transmission (CVT100) and the transmission (T100), and the clutch unit (CL200) is additionally installed between the continuous variable transmission (CVT200) and the transmission (T200), to individually control the linking transmission or cutting separation between the continuous variable transmission (CVT100) and the transmission (T100), and between the continuous variable transmission (CVT200) and the transmission (T200), wherein:
-- clutch units (CL100), (CL200): related to the clutch device or structure with the function of linking transmission or cutting separation, which is driven by manpower, and/or electricity, and/or magnetic power, and/or machine power, and/or gas pressure, and/or liquid pressure, and/or centrifugal force, and which has the rotary input side and the rotary output side;
-- stabilizing device (SDT100): constituted by dual-end shaft coupling device with the functions of setting coupling torque and sliding damping when exceeding the torque, including the stabilizing device with dual-end shaft structure formed by fluid viscosity effect, fluid damping effect, mechanical friction effect, or electromagnetic eddy current effect or power generation anti-torque effect, in which the two revolution ends individually link between two loads of the clutch units (CL100) and (CL200) individually driven by the continuous variable transmissions (CVT100) and (CVT200), during driving operation, if the load at individual load side varies, or if the response time of the clutch units (CL100) and (CL200) at the loads individually driven by the continuous variable transmissions (CVT100) and (CVT200) is slower, or if the clutch units (CL100) and (CL200) operate unstably because of the synchronous response time difference thereof, the stabilizing device (SDT100) installed between the loads of the clutch units (CL100) and (CL200) operates to stabilize the system.
